# EUROPEAN PATENT SPECIFICATION

(11) **EP 2 624 335 B1**
(45) Date of publication and mention of the grant of the patent: **21.02.2018**
(21) Application number: 12195533.0
(22) Date of filing: 04.12.2012
(51) Int. Cl.: H01M 2/20, H01M 2/10, H01M 2/02

(54) **Rechargeable battery assembly and pack including the same**
Wiederaufladbare Batterieanordnung und Batteriepack damit
Ensemble de batterie rechargeable et blocbatterie le comprenant

(30) Priority: 01.02.2012 US 201261593759 P; 29.11.2012 US 201213689587
(43) Date of publication of application: 07.08.2013
(73) Proprietor: Samsung SDI Co., Ltd., Yongin-si, Gyeonggi-do (KR)
(72) Inventor: Song, Young-Bae, Yongin-si (Gyeonggi-do) (KR); Jung, Chang-Kwon, Seo-gu (Gwangju) (KR)
(74) Representative: Santarelli

(56) References cited:
- EP-A1- 0 727 833
- EP-A1- 2 034 539
- EP-A1- 2 325 926
- EP-A2- 2 284 928
- WO-A1-2011/038908

## Description

### BACKGROUND OF THE INVENTION

### (a) Field of the Invention

The present invention relates to a rechargeable battery assembly formed of a plurality of cells and a rechargeable battery pack having a plurality of rechargeable battery assemblies.

### (b) Description of the Related Art

A rechargeable battery is a battery that can be repeatedly charged and discharged, unlike a primary battery. A small size rechargeable battery is used as a power supply for small electronic devices such as cellular phones, notebook computers, and camcorders, while a medium or large sized rechargeable battery is used as a power supply for driving motors in hybrid vehicles and the like.

The rechargeable battery may be used as a single cell, or may be used in a rechargeable battery assembly and in rechargeable battery pack, formed by connecting a plurality of cells in parallel or in series for realization of large capacity. For example, the rechargeable battery pack uses a tab connecting the plurality of cells in parallel or in series, and has a structure in which a current is drawn out from one side tab.

When a rechargeable battery assembly or a rechargeable battery pack is manufactured by connecting a plurality cells in parallel or in series, each cell and a tab are welded in each of the cells. In this case, management of welding quality is difficult and workability and productivity are deteriorated. Further, insulation between the plurality of cells in a pack state cannot be easily realized, and thus consecutive explosion may occur from firing of a single cell, causing severe impact.

A difference in lengths of discharging paths in the plurality of cells connected in parallel causes non-uniformity in current distribution. That is, outputs of the respective cells in the assembly or pack state are lower than an output of a single cell. In the pack state, deterioration distribution of cell life-span occurs and high-current discharge (e.g., 50A) cannot be easily realized.

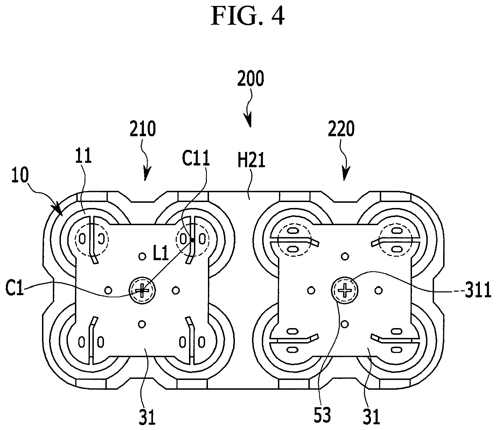

EP 2284928 is related to a battery pack with improved heat dissipation efficiency. An embodiment illustrated in Figure 4 describes an assembled battery pack in which batteries are disposed in portions of cells S defined in holder case portions at regular intervals. A lead plate, inserted in an assembly protrusion, is disposed outside the holder case portions and connects the batteries. An insulating lead tape is attached to an outside of the lead plate so as to electrically insulate it from the external environment. In view of this Figure, the connection holes in the lead plate and the insulating tape are not at equal distance from the crosses which make the electrical connecting end of the batteries.

EP 2034559 discloses a battery which cells are prismatic and cylindrical, connected one with the other by a contact strip, where the contact strip assures the electrical interconnection of the cells.

### SUMMARY OF THE INVENTION

One aspect of the present invention is to provide a rechargeable battery assembly that can assure high-current discharging characteristic by designing a plurality of cells and realize uniform current distribution to each cell.

Another aspect of the present invention is to provide a rechargeable battery assembly that can improve safety by applying a plurality of cells and forming an insulation structure between the cells.

Another aspect of the present invention is to provide a rechargeable battery pack connecting the rechargeable battery assembly in plural.

A rechargeable battery assembly according to the invention comprises usually a plurality of cells, each cell having a first electrode terminal and a second electrode terminal, the battery assembly comprising a first tab electrically connecting the first electrode terminals of a first set of the cells, and a second tab electrically connecting the second electrode terminals of the first set of the cells,
wherein the rechargeable battery assembly is characterized in that the distances (L1) from respective centers of said first electrode terminals to a connection hole defining a mechanical and electrical connecting end of the first tab and formed in a center of the first tab are set to be equivalent to each other.

Preferably, the distances (L2) from respective centers of said second electrode terminals to a connection hole defining an opposite mechanical and electrical connecting end of the second tab and formed in a center of the second tab are set to be equivalent to each other.

In a preferred embodiment, the first set of cells consists of four cells.

A rechargeable battery assembly according to an embodiment of the present invention generally includes a plurality of cells, each formed of a rechargeable battery, first and second holders receiving the cells and coupled to each other, a first tab connecting first terminals in parallel in the first holder side, and a second tab connecting second terminals of the cells in parallel in the opposite side of the first tab, and first distances L1 from respective centers of the first terminals to a connection hole formed in a first center of the first tab are set to be equivalent to each other. Second distances L2 from centers of the second terminals to a connection hole formed in a second center of the second tab may be set to be equivalent to each other.

In one embodiment, the battery assembly comprises a pack housing comprising a first hollow holder and a second hollow holder constructed in a structure for housing the cells, wherein the first holder and the second holder are adapted to cooperate with each other while the cells are mounted inside them.

In this case, preferably, the first and second holders are respectively provided with a coupling groove and a coupling protrusion which are able to cooperate with each other.

The first holder may comprise receiving portions, and the second holder may comprise corresponding receiving portions, each of the corresponding receiving portions of the first and second holders receiving one cell. In this case, each receiving portion of the first holder may comprise a first stopper and each corresponding receiving portion of the second holder may comprise a second stopper, so as to maintain each of the cells between them.

In a further embodiment, the first holder comprises a first insert nut facing the first connecting hole, and the second holder comprises a second insert nut facing the second connecting hole, and a first set screw and a second set screw are respectively engaged in the first insert nut through the first connection hole, and in the second insert nut through the second connection hole. In this case, the first set screw and the second set screw can respectively fixe a first terminal of a first draw out line and a second terminal of a second draw out line.

According to a particular embodiment, the battery assembly is such that:
- the first tab comprises a first portion and a second portion having each one a center, the first portion being adapted to electrically connect a first set of cells and the second portion being adapted to electrically connect a second set of cells.
- the second tab comprises a first portion and a second portion having each one a center, the first portion being adapted to electrically connect the first set of cells and the second portion being adapted to electrically connect the second set of cells,
- the distances from respective centers of the first electrode terminals of the first set of cells to a connection hole defining a connecting end of the first portion of the first tab and formed in the center of the first portion of the first tab are set to be equivalent to each other,
- the distances from respective centers of the second electrode terminals of the first set of cells to a connection hole defining an opposite connecting end of the first portion of the second tab and formed in the center of the first portion of the second tab are set to be equivalent to each other,
- the distances from respective centers of the first electrode terminals of the second set of cells to a connection hole defining a connecting end of the second portion of the first tab and formed in a center of the second portion of the first tab are set to be equivalent to each other, and
- the distances from respective centers of the second electrode terminals of the second set of cells to a connection hole defining a second opposite connecting end of the second portion of the second tab and formed in a center of the second portion of the second tab, are set to be equivalent to each other.

In this case, a sensing hole can be provided between the first portion and the second portion of the first tab for connection of a sensing terminal and/or a sensing hole can be provided between the first portion and the second portion of the second tab for connection of a sensing terminal.

The invention also includes a rechargeable battery pack comprising a plurality of rechargeable battery assemblies according to the invention, the rechargeable battery pack further comprising a bus bar connecting a pair of first and second tabs to each other through the connections holes respectively formed in a center of the first tab of a first battery assembly and a center of the second tab of a second battery assembly, the first and the second battery assemblies being adjacent battery assemblies forming a pair to one side of which the bus bar is, and, at the opposite side of the bus bar, first and second draw out lines respectively connected to connection holes formed in a center of the first tab of the second battery assembly and in a center of the second tab of the first battery assembly.

Preferably, the rechargeable battery assemblies are connected in series and/or in parallel.

A rechargeable battery pack according to an embodiment of the present invention usually includes: a plurality of unit assemblies receiving a plurality of cells, each formed of a rechargeable battery in holders and formed by connecting first terminals of the respective cells in parallel using a first tab and connecting second terminals of the respective cells in parallel using a second tab; a bus bar connecting a pair of first and second tabs to each other through connection holes respectively formed in a first center of the first tab and a second center of the second tab at one side of one pair of at least neighboring unit assemblies among the unit assemblies; and first and second draw out lines respectively connected to connection holes formed in a first center of the first tab and a second center of the second tab at the other side of the pair of unit assemblies.

As described, according to the present invention, safety of the rechargeable battery assembly can be improved by forming an insulation structure between cells and a high-current discharging characteristic can be assured by realizing advantageously uniform current distribution to respective cells.

The rechargeable battery pack according to the present invention can assure advantageously a high-current discharging characteristic by realizing uniform current distribution to the respective cells in realization of a high voltage or a large capacity by connecting rechargeable battery assemblies in series or in parallel, and deterioration spread of cell life-span can be advantageously reduced.

### BRIEF DESCRIPTION OF THE DRAWINGS

FIG. 1 is a perspective view of a rechargeable battery assembly according to a first embodiment of the present invention.
FIG. 2 is an exploded perspective view of the rechargeable battery assembly of FIG. 1.
FIG. 3 is a cross-sectional view of FIG. 2, taken along the line III-III.
FIG. 4 is a top plan view of a rechargeable battery assembly according to a second embodiment of the present invention.
FIG. 5 is a top plan view of a rechargeable battery assembly according to a third embodiment of the present invention.
FIG. 6 is a top plan view of a rechargeable battery pack employing the rechargeable battery assembly of FIG. 1 according to a fourth embodiment of the present invention.
FIG. 7 is a bottom view of FIG. 6.
FIG. 8 is a top plan view of a rechargeable battery pack employing the rechargeable battery assembly of FIG. 4 according to a fifth embodiment of the present invention.
FIG. 9 is a bottom view of FIG. 8.
FIG. 10 is a top plan view of a rechargeable battery pack employing the rechargeable battery assembly of FIG. 1 according to a sixth embodiment of the present invention.
FIG. 11 is a bottom view of FIG. 10.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

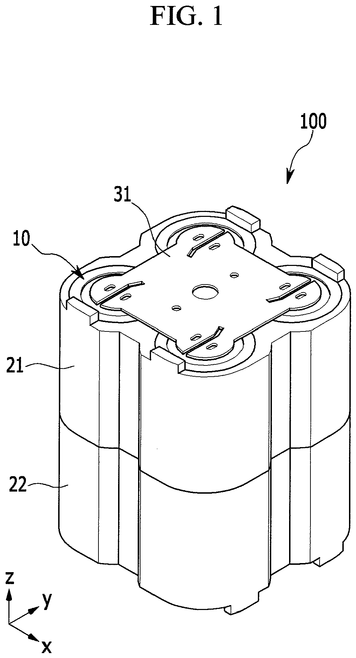

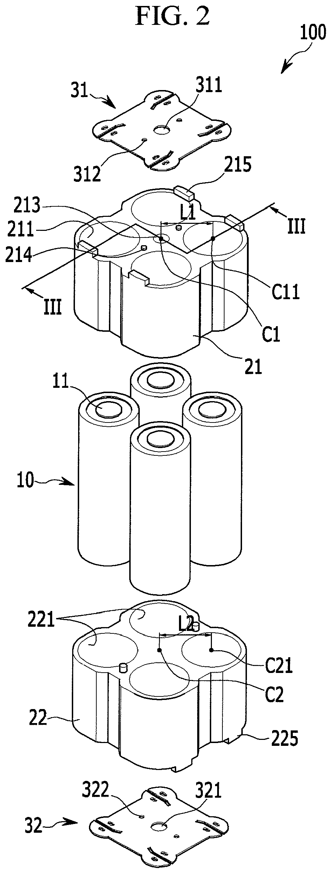

FIG. 1 is a perspective view of a rechargeable battery assembly 100 according to a first embodiment of the present invention and FIG. 2 is an exploded perspective view of the rechargeable battery assembly 100 of FIG. 1. Referring to FIG. 1 and FIG. 2, the rechargeable battery assembly 100 includes a plurality of cells 10, each formed of a rechargeable battery, first and second holders 21 and 22 receiving the cells 10 and coupled to each other, and first and second tabs 31 and 32 connecting terminals of the cells in parallel.

For example, the cells 10 may be formed of a cylindrical rechargeable battery that iteratively performs charging and discharging. That is, the cell 10 includes an electrode assembly formed by layering or spirally winding a positive electrode and a negative electrode, interposing a separator therebetween, a can installing an electrolyte solution and the electrode assembly, and a cap (not shown) fastened to the cap in a air-tight structure and electrically connected to the electrode assembly.

The first holder 21 receives an upper portion of the cell 10 and the second holder 22 receives a lower portion of the cell 10. That is, the first holder 21 is extended downward from a first terminal (for convenience, referred to as a positive terminal) 11 side provided in the upper portion of the cell 10 and the second holder 22 is extended upward from a second terminal (for convenience, referred to as a negative terminal) 12 side and then coupled to the first holder 21 such that the first and second holders 21 and 22 receive the cells 10.

The first and second holders 21 and 22 respectively include receiving portions 211 and 221, each being formed in the shape of a cylindrical hole corresponding to a side shape (i.e., cylinder shape) of the cells 10 to receive the cells 10. When the first and second holders 21 and 22 are coupled to each other, the receiving portions 211 and 221 are connected to each other to correspond to the cells 10. The number of receiving portions 211 and 221 correspond to the number of cells 10 provided in the rechargeable battery assembly 100.

The rechargeable battery assembly 100 of the first exemplary embodiment is formed by forming four receiving portions 211 and 221 in each of the first and second holders 21 and 22 and forming four cells 10 corresponding to the four receiving portions. In addition, the rechargeable battery assembly may be formed by forming two or three receiving portions in the first and second holders and providing cells corresponding to the number of receiving portions (not shown).

The first holder 21 separates neighboring receiving portions 211, and the second holder 22 separates neighboring receiving portions 221. Thus, the first and second holder 21 and 22 are formed of flame retardants and receive the cells 10 in the separated state such that an insulation structure is formed between the respective cells 10. For example, the first and second holders 21 and 22 may be formed of polyphenylene sulfide (PPS) resins. Thus, the first and second holders 21 and 22 can prevent consecutive explosion of other neighboring cell 10 when one of the plurality of cells 10 are exploded.

The receiving portions 211 and 221 are symmetrical to each other with reference to the first and second centers C1 and C2 with respect to planes (xy plane) of the first and second holders 21 and 22. The first and second centers C1 and C2 of the first and second holders 21 and 22 are disposed in a straight light in the up and down direction (i.e., z-axis direction). In the first exemplary embodiment, four receiving portions 211 and 221 are provided and they can receive four cells 10 in a symmetric structure.

First and second distances L1 and L2 from the first and second centers C1 and C2 of the first and second holders 21 and 22 to the centers C11 and C21 respectively of the first electrode terminals 11 and of the second electrode terminals 12, named here respectively first and second centers, of respective receiving portions 211 and 221, are set to be equivalent to each other. In the first holder 21, the first distance L1 is a distance from the first center C1 of the first holder 21 to each of the centers C11 of the four receiving portions 211, and thus the distances from the first center C1 of the first holder 21 to the centers C11 of the respective receiving portions 211 are set to be equivalent to each other. Further, in the second holder 22, the second distance L2 is a distance from the second center L2 of the second holder 22 to the respective centers C21 of the respective four receiving portions 221 in the second holder 22, and thus the distances from the second center C2 to the centers C21 of the four receiving portions 221 are set to be equivalent to each other.

The four centers C11 of the first holder 21 are disposed on apexes of the square, and the four centers C21 of the second holder 22 are disposed on apexes of the square. In addition, the centers C11 of the first holder 21 and the centers C21 of the second holder 22 are disposed on the same line in the z-axis direction.

When the first and second holder form three receiving portions, the centers C11 and C21 of the receiving portions may be disposed on the apexes of the triangle and the first and second centers may be disposed in the center of the triangle (not shown).

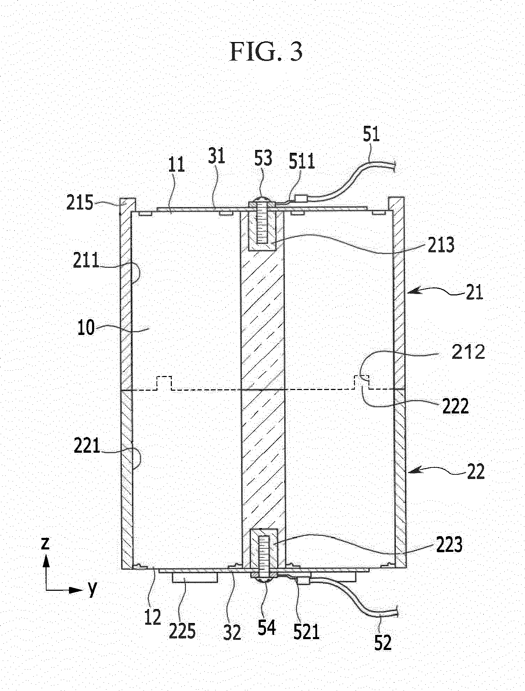

FIG. 3 is a cross-sectional view of FIG. 2, taken along the line III-III. Referring to FIG. 2 and FIG. 3, a first tab 31 connects positive terminals 11 of the cells 10 in parallel in the first holder 21 side, and a second tab 32 connects negative terminals 12 of the cells 10 in parallel in the opposite side of the first tab 31.

For example, the first and second tabs 31 and 32 are respectively formed of nickel (Ni) tabs and may be respectively connected to the positive and negative terminals 11 and 12 by projection welding. Thus, the four cells 10 connected in parallel can perform charging and discharging under the same condition through the first and second tabs 31 and 32.

Since the receiving portions 211 and 221 are symmetrically disposed in the first and second holders 21 and 22, the first and second tabs 31 and 32 connecting the cells 10 received in the receiving portions 211 and 221 are formed in the symmetric structure corresponding to the receiving portions 211 and 221.

The first and second tabs 31 and 32 respectively form connection holes 311 and 321 in the centers thereof. The connection holes 311 and 321 face the first and second centers C1 and C2 of the first and second holders 21 and 22. Thus, a distance from a center (matching the first center C11 of the receiving portion 211) of each of the positive terminal 11 to the center of the connection hole 311 of the first tab 31 is set to be equivalent to the distance L1 between the first center C1 of the first holder 21 and the center 211 of the receiving portion 211.

In addition, a distance from each center (matching the center C21 of the receiving portion 221) of each of the negative terminals 12 to the center of the connection hole 321 of the second tab 32 is set to be equivalent to the second distance L2 between the second center C2 of the second holder 22 and the center C21 of the receiving portion 221.

Meanwhile, the first and second holders 21 and 22 are respectively provided with a coupling groove 212 and a coupling protrusion 222 in a lower side and an upper side that faces each other in a length direction (i.e., z-axis direction) of the cell 10. The coupling groove 212 and the coupling protrusion 222 are coupled to each other by a tight fitting and receive the cells 10 in the first and second holders 21 and 22 such that the rechargeable battery assembly 100 is integrally formed. The coupling groove 212 and the coupling protrusion 222 are formed as two pairs so as to face each other in the first and second holders 21 and 22, and they may be provided as one pair or four pairs (not shown).

The first holder 21 supports an end of the positive terminal 11 side of each of the received cells 11 by having a first stopper 215 protruding toward the receiving portion 211 from an upper end thereof to thereby prevent separation of the cells 10. In addition, the second holder 22 is provided with a second stopper 225 protruding toward the receiving portion 211 from a lower end thereof to support an end of the negative terminal 12 side of each of the received cells 10 to thereby prevent separation of the cells 10.

Four first stoppers 215 are formed as pairs disposed opposite to each other at both sides in the y-axis direction of the first holder 21, and four second stoppers 225 are formed as pairs respectively disposed opposite to each other at both sides in the y-axis direction of the second holder 22. Thus, the cells 10 can be stably received in the receiving portions 211 and 221 of the first and second holders 21 and 22.

The first and second holders 21 and 22 are respectively provided with insert nuts 213 and 223 insert-molded in the first and second centers C1 and C2. That is, the insert nuts 213 and 223 face the connection holes 311 and 321 of the first and second tabs 31 and 32.

The insert nuts 213 and 223 are fastened with set screws 53 and 54 disposing terminals 511 and 521 of first and second draw out lines 51 and 52 to the first and second tabs 31 and 32 and being inserted to the connection holes 311 and 321.

The first draw out line 51 is connected to the positive terminal 11 connected in parallel by the first tab 31 and draws out the positive electrode of the rechargeable battery assembly 100. The second draw out line 52 is connected to the negative terminal 12 connected in parallel by the second tab 32 and draws out the negative electrode of the rechargeable battery assembly 100.

In this case, the first tab 31 equally sets lengths of charging and discharging current paths respectively reaching to the first draw out line 51 from the positive terminals 11 of the four cells 10 to the first distance L1, and the second tab 32 sets lengths of charging and discharging current paths reaching the second draw out line 51 from the negative terminals 12 of the four cells 10 to the second distance L2. Accordingly, distribution of charging and discharging currents can be balanced between the four cells 10.

Thus, the rechargeable battery assembly 100 can realize temperature imbalance of the four cells 100 to be included within a minimum range by connecting the cells 10 in parallel, an exothermic temperature deviation in the first and second tabs 31 and 32 can be set to be within the minimum range, and charging and discharging outputs of the respective cells 10 can be equivalent to that of a single cell. Accordingly, deterioration spread of the cell life-span in the rechargeable battery assembly 100 can be eliminated.

In addition, the insert nuts 213 and 223 enable connection of a bus bar (not shown) for discharging of a large amount of current. That is, the rechargeable battery assembly 100 is disposed in plural and the bus bar is disposed in insert nuts 213 and 223 of neighboring rechargeable battery assemblies 100 such that set screws inserted to connection holes in the bus bars can be fastened to the insert nuts 213 and 223.

Meanwhile, the first and second holders 21 and 22 are provided with one pair of fixing protrusions 214 (not shown) in both sides of the connection holes 311 and 321 and the fixing protrusions 214 are respectively coupled to fixing holes 312 and 322 formed as a pair in both sides of the connection holes 311 and 321 of the first and second tabs 31 and 32.

The fixing protrusions 214 (not shown) and the fixing holes 312 and 322 are formed corresponding to each other to fix the first and second tabs 31 and 32 respectively on the first and second holders 21 and 22 before projection-welding the first and second tabs 31 and 32 respectively to the positive and negative terminals 11 and 12 of the cell 10, and accordingly a process for welding the first and second tabs 31 and 32 with respect to the cell 10 can be simplified.

Hereinafter, various exemplary embodiments of the present invention will be described, and a description for a configuration that is the same as that of the first and the above-stated embodiment will be omitted.

FIG. 4 is a top plan view of a rechargeable battery assembly 200 according to a second embodiment of the present invention. Referring to FIG. 4, the rechargeable battery assembly 200 according to the second embodiment is formed by connecting 8 cells 10 in parallel.

The rechargeable battery assembly 100 of the first embodiment is formed by connecting 4 cells in parallel, but the rechargeable battery assembly 200 of the second embodiment includes a first parallel connection portion 210 connecting four cells 10 in parallel and a second parallel connection portion 220 connecting 4 cells 10 in parallel.

A first holder 221 receives upper portions of the eight cells 10 and a second holder (not shown) receives lower portions of the eight cells 10. In the first and second parallel connection portions 210 and 220, the first holder 221 and the second holder are formed with the same structure of the first and second holders 21 and 22 of the first embodiment and coupled to each other. However, the first holder 221 and the second holder of the second embodiment receive eight cells 10.

Two first tabs 31 are provided and thus connect four positive terminals 11 of the cells 10 in parallel in the first holder 211 side. That is, the two first tabs 31 are respectively welded to the positive terminals 11 in the first and second parallel connection portions 210 and 220 of the first holder 221. In this case, first distances L1 from first centers C1 of the first and second parallel connection portions 210 and 220 of the first holder 221 to centers C11 of the positive terminals 11 are set to be equivalent to each other.

Although it is not shown, the second tab (not shown) is the same as the first tab 31 and two second tabs are provided to connect four negative terminals of the cells 10 in parallel in the opposite side of the first tab 31. That is, the two second tabs are respectively welded to the negative electrodes in the first and second parallel connection portions of the second holder. In this case, second distances from second centers of the first and second parallel connection portions 210 and 220 of the second holder to centers of the negative terminals are set to be equivalent to each other.

A set screw 53 is fastened to an insert nut through a connection hole 311 of the first tab 21 such that a draw out line or a bus bar can be mechanically and electronically connected to the first tab 31. In addition, a set screw is fastened to an insert nut through a connection hole of the second tab such that a draw out line or a bus bar can be connected to the second tab (not shown).

Accordingly, uniform distribution of charging and discharging currents can be realized between the eight cells 10. The rechargeable battery assembly 200 according to the second embodiment can realize large capacity compared to the rechargeable battery assembly 100 of the first embodiment.

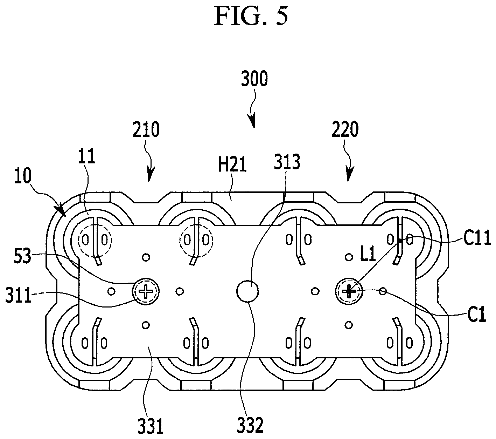

FIG. 5 is a top plan view of a rechargeable battery assembly 300 according to a third embodiment of the present invention. Referring to FIG. 5, the rechargeable battery assembly 300 of the third embodiment is formed by forming a first tab 331 and a second tab each one in one piece and connecting eight cells 10 in parallel. Here, a description of the second tab will be omitted because the second tab is the same structure of the first tab 331.

The first tab 331 mechanically and electrically connects positive terminals 11 of the cells 10 in parallel in a first holder 221 side. That is, the first tab 331 is fixed to the first holder 221 by set screws 53 fastened to insert nuts through two symmetrically disposed connection holes 311, and welded to the positive terminals 11.

In this case, first distances L1 from first centers C1 of first and second parallel connection portions 210 and 220 of the first holder 221 to centers C11 of the positive terminals 11 are set to be equivalent to each other. Draw out lines (not shown) are respectively mechanically and electrically connected to the first centers of the first and second parallel connection portions 210 and 220 by the set screws 53.

In addition, a sensing hole 332 may further be provided between the first and second parallel connection portions 210 and 220 of the first tab 331 for connection of sensing terminals to detect a current and a voltage of the rechargeable battery assembly 300. The first holder 221 further includes an insert nut 313 provided corresponding to the sensing hole 332 to enable fastening of a set screw (not shown) that fixes the sensing terminal.

Although it is not illustrated, the second embodiment of FIG. 4 and the third embodiment of FIG. 5 may be simultaneously applied to the rechargeable battery assembly. For example, the rechargeable battery assembly may be formed by forming four cells in parallel with the first tab 31 of FIG. 4 and connecting eight cells in series with the first tab 331 of FIG. 5. In this case, the first tab of FIG. 5 also performs a role of a bus bar connecting the first and second parallel connection portions in series.

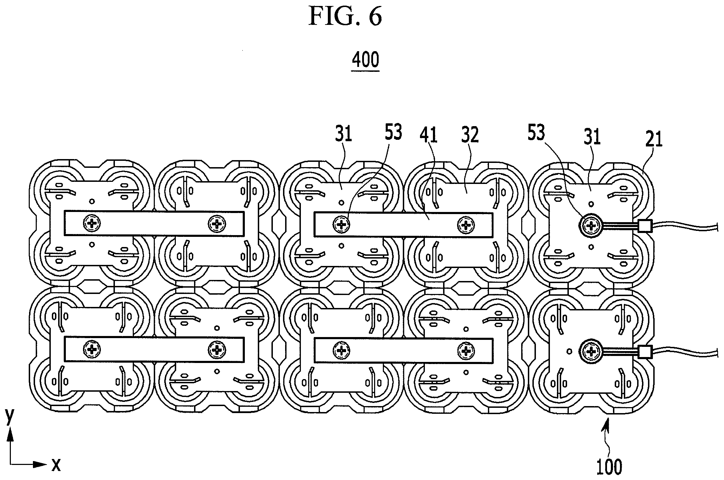

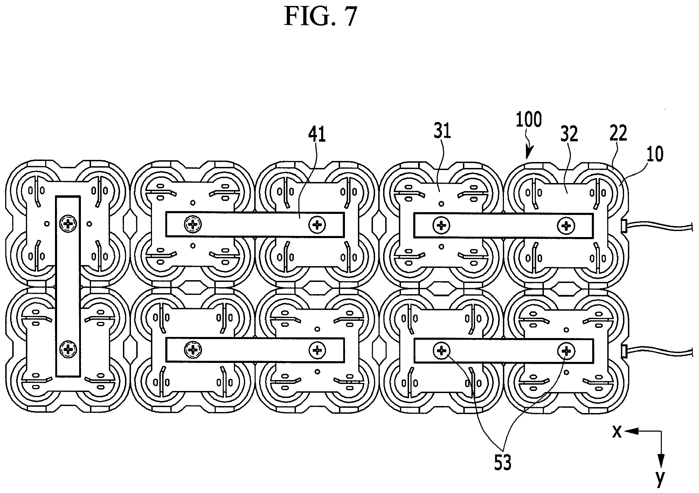

FIG. 6 is a top plan view of a rechargeable battery pack 400 employing the rechargeable battery assembly 100 of FIG. 1 according to a fourth embodiment of the present invention and FIG. 7 is a bottom view of FIG. 6. Referring to FIG. 6 and FIG. 7, the rechargeable battery pack 400 is formed by serially connecting ten rechargeable battery assemblies 100 formed by connecting four cells 10 in parallel.

In FIG. 6, first and second tabs 31 and 32 disposed in first and second holders 21 and 22 disposed on an upper side of the rechargeable battery pack 400 are mechanically and electrically connected with each other by a bus bar 41, and, in FIG. 7, first and second tabs 31 and 32 disposed in first and second holders 21 and 22 disposed on a bottom side of the rechargeable battery pack 400 are mechanically and electrically connected with each other by a bus bar 41.

That is, bus bars 41 are disposed in connection holes of first tabs and connection holes 321 of second tabs 32 of neighboring rechargeable battery assemblies 100 and the bus bars 41 are fixed using the set screws 50 such that the first and second tabs 31 and 32 are connected in series by the bus bar 41. The rechargeable battery pack 400 of the fourth embodiment can realize a high voltage. In this case, the four cells 10 of each of the rechargeable battery assemblies 100 realize uniform distribution of charging and discharging currents.

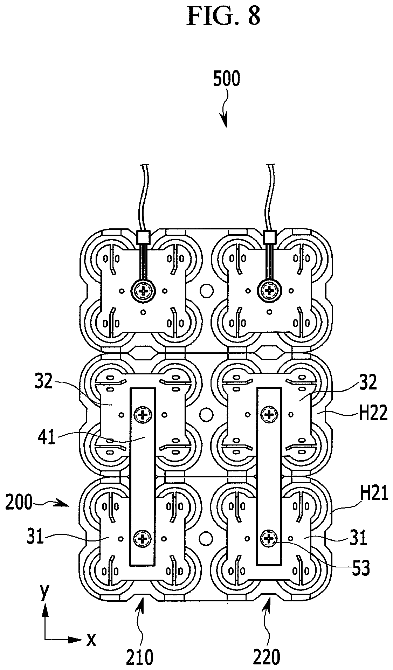

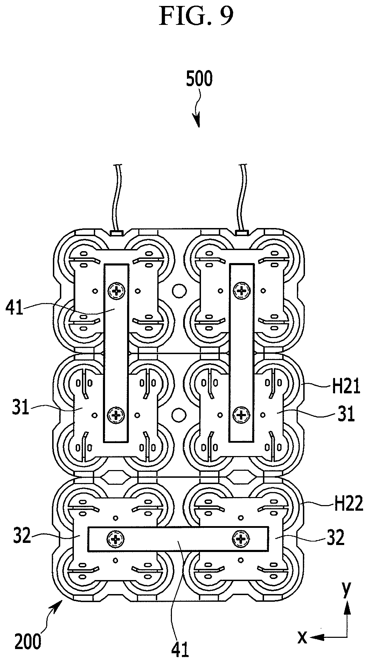

FIG. 8 is a top plan view of a rechargeable battery pack 500 employing the rechargeable battery assembly 200 of FIG. 4 according to a fifth embodiment of the present invention and FIG. 9 is a bottom view of FIG. 8. Referring to FIG. 8 and FIG. 9, the rechargeable battery pack 500 is formed by serially connecting three rechargeable battery assemblies 200, each formed by connecting eight cells 10 in parallel. Among the eight cells 10, four cells 10 are connected in parallel in a first parallel connection portion 210 and four cells 10 are connected in parallel in a second parallel connection portion 220.

In FIG. 8, first and second tabs 31 and 32 disposed in first and second holders 221 and 222 disposed in an upper side of the rechargeable battery pack 500 are mechanically and electrically connected with each other by a bus bar 41, and in FIG. 9, first and second tabs 31 and 32 disposed in first and second holders 221 and 222 disposed in a bottom side of the rechargeable battery pack 50 are mechanically and electrically connected with each other by a bus bar 41.

That is, the bus bar 41 are disposed in connection holes 311 of the first tabs 31 and connection holes 321 of the second tabs 32 of neighboring rechargeable battery assemblies and the bus bar 41 are fixed using set screws 53 such that the first and second tabs 31 and 32 are connected in series by the bus bars 41. The rechargeable battery pack 500 of the fifth embodiment can realize a high voltage. In this case, the four cells 10 of each of the rechargeable battery assemblies 200 can realize uniform distribution of charging and discharging currents.

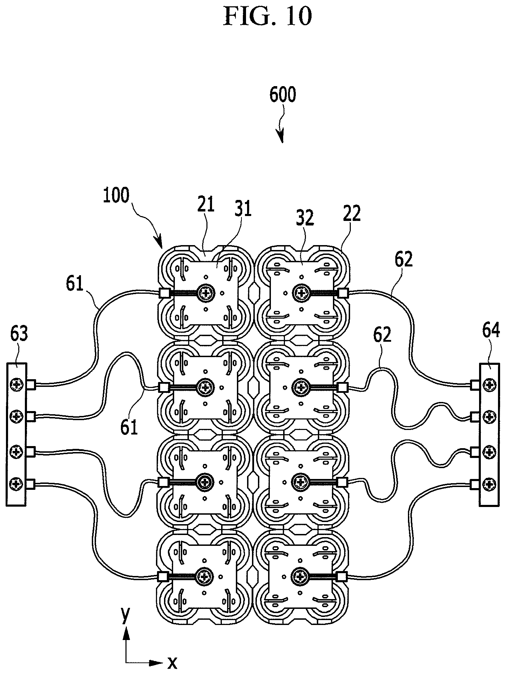

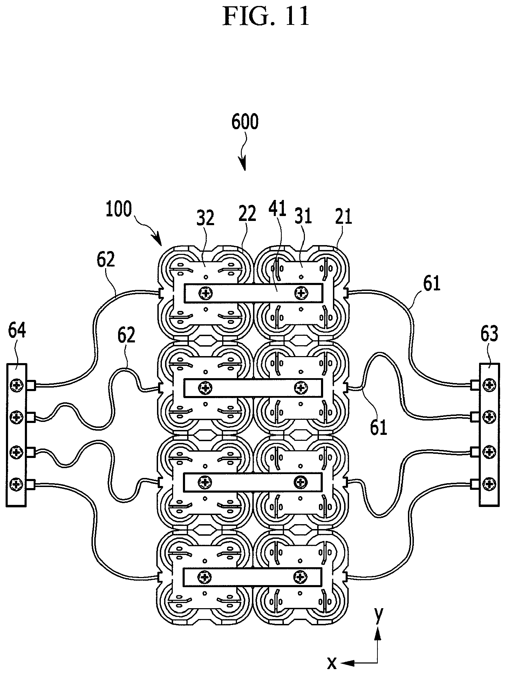

FIG. 10 is a top plan view of a rechargeable battery pack 600 employing the rechargeable battery assembly 100 of FIG. 1 according to a sixth embodiment of the present invention and FIG. 11 is a bottom view of FIG. 10. Referring to FIG. 10 and FIG. 11, the rechargeable battery pack 600 is formed by connecting eight rechargeable battery assemblies 100 formed by parallelly connecting four cells 10 in parallel.

In FIG. 10, first and second draw out lines 61 and 62 are mechanically and electrically connected to first and second tabs 31 and 32 disposed in first and second holders 21 and 22 disposed in an upper side of the rechargeable battery pack 600, and in FIG. 11, first and second tabs 31 and 32 disposed in first and second holders 21 and 22 disposed in a lower side of the rechargeable battery pack 600 are mechanically and electrically connected with each other by a bus bar. The bus bar 41 connects a pair of first tabs 31 and a pair of second tabs 32 in series through connection holes 311 and 321 of the first and second tabs 31 and 32 in lower sides of the rechargeable battery assemblies 100.

In upper sides of the rechargeable battery assemblies 100, first draw out lines 61, each having the same length are respectively mechanically and electrically connected to the connection hole 311 of the first tab 31 with one ends thereof and the other ends of the first draw out lines 61 are connected to a first connector 63. Second draw out lines 62, each having the same length, are respectively mechanically and electrically connected to the connection holes 321 of the second tab 32 with one ends thereof, and the other ends of the second draw out lines 62 are connected to a second connector 64.

The rechargeable battery pack 600 of the sixth embodiment can realize high capacity. In this case, four cells 10 of each of the rechargeable battery assemblies 100 can realize uniform distribution of charging and discharging currents.

While this invention has been described in connection with what is presently considered to be practical exemplary embodiments, it is to be understood that the invention is defined by the subject-matter of the appended claims.

### <Description of symbols>

| | |
|---|---|
| 10: cell | 11: first terminal (positive terminal) |
| 12: second terminal (negative terminal) | 21, 221: first holder |
| 22: second holder | 31, 331: first tab |
| 32: second tab | 41: bus bar |
| 51,61: first draw out line | |
| 52, 62: second draw out line | 53, 54: set screw |
| 63, 64: first and second connector | |
| 100, 200, 300: rechargeable battery assembly | |
| 211, 221: receiving portion | 212: coupling groove |
| 213, 223: insert nut | 214: fixing protrusion |
| 215, 225 : first and second stopper | 222 : coupling protrusion |
| 311, 321: connection hole | 312, 322 : fixing hole |

| | |
|---|---|
| 332: sensing hole | 400, 500, 600 : rechargeable battery pack |
| C1, C2: first and second center | |
| C11, C21: center of the first and second electrode terminals | |
| L1, L2: first and second distance | |

## Claims

1. A rechargeable battery assembly (100, 200, 300), comprising a plurality of cells (10), each cell (10) having a first electrode terminal (11) and a second electrode terminal (12), the battery assembly (100, 200, 300) comprising a first tab (31, 331) electrically connecting the first electrode terminals (11) of a first set of the cells (10), and a second tab (32) electrically connecting the second electrode terminals (12) of the first set of the cells (10),
wherein the rechargeable battery assembly (100, 200, 300) is **characterized in that** the distances (L1) from respective centers (C11) of said first electrode terminals (11) to a connection hole (311) defining a mechanical and electrical connecting end of the first tab (31, 331) and formed in a center (C1) of the first tab (31, 331) are set to be equivalent to each other.

2. A rechargeable battery assembly according to claim 1, wherein the distances (L2) from respective centers (C21) of said second electrode terminals (12) to a connection hole (321) defining an opposite mechanical and electrical connecting end of the second tab (32) and formed in a center (C2) of the second tab (32) are set to be equivalent to each other.

3. A rechargeable battery (100) assembly according to any one of claims 1 and 2, wherein the first set of cells (10) consists of four cells (10).

4. A rechargeable battery assembly (100) according to any one of claims 1 to 3, wherein the assembly (100) comprises a pack housing (21, 22) comprising a first hollow holder (21) and a second hollow holder (22) constructed in a structure for housing the cells (10), wherein the first holder (21) and the second holder (22) are adapted to cooperate (212, 222) with each other while the cells (10) are mounted inside them.

5. A rechargeable battery assembly (100) according to claim 4, wherein the first and second holders (21, 22) are respectively provided with a coupling groove (212) and a coupling protrusion (222) which are able to cooperate with each other.

6. A rechargeable battery assembly (100) according to any one of claims 4 and 5, wherein the first holder (21) comprises receiving portions (211), and the second holder (22) comprises corresponding receiving portions (221), each of the corresponding receiving portions (211, 221) of the first and second holder (21, 22) receiving one cell (10).

7. A rechargeable battery assembly (100) according to claim 6, wherein each receiving portion (211) of the first holder (21) comprises a first stopper (215) and each corresponding receiving portion (221) of the second holder (22) comprises a second stopper (225), so as to maintain each of the cells (10) between them.

8. A rechargeable battery assembly (100) according to any one of claims 4 to 7, wherein the first holder (21) comprises a first insert nut (213) facing the first connecting hole (311), and the second holder (22) comprises a second insert nut (223) facing the second connecting hole (321), and wherein a first set screw (53) and a second set screw (54) are respectively engaged in the first insert nut (213) through the first connection hole (311), and in the second insert nut (223) through the second connection hole (321).

9. A rechargeable battery assembly (100) according to claim 8, wherein the first set screw (53) and the second set screw (54) respectively fixe a first terminal of a first draw out line (51) and a second terminal of a second draw out line (52).

10. A rechargeable battery assembly (100) according to any one of claims 1 to 9, wherein the first tab (31) comprises a first portion and a second portion having each one a center, the first portion being adapted to electrically connect a first set of cells and the second portion being adapted to electrically connect a second set of cells,
wherein the second tab (32) comprises a first portion and a second portion having each one a center, the first portion being adapted to electrically connect the first set of cells and the second portion being adapted to electrically connect the second set of cells,
wherein the distances from respective centers of the first electrode terminals of the first set of cells to a connection hole defining a connecting end of the first portion of the first tab and formed in the center of the first portion of the first tab are set to be equivalent to each other,
wherein the distances from respective centers of the second electrode terminals of the first set of cells to a connection hole defining an opposite connecting end of the first portion of the second tab and formed in the center of the first portion of the second tab are set to be equivalent to each other,
wherein the distances from respective centers of the first electrode terminals of the second set of cells to a connection hole defining a connecting end of the second portion of the first tab and formed in a center of the second portion of the first tab are set to be equivalent to each other, and
wherein the distances from respective centers of the second electrode terminals of the second set of cells to a connection hole defining a second opposite connecting end of the second portion of the second tab and formed in a center of the second portion of the second tab, are set to be equivalent to each other.

11. A rechargeable battery assembly (200) according to claim 10, wherein a sensing hole is provided between the first portion and the second portion of the first tab for connection of a sensing terminal and/or a sensing hole is provided between the first portion and the second portion of the second tab for connection of a sensing terminal.

12. A rechargeable battery pack (400, 500, 600), comprising a plurality of rechargeable battery assemblies (100, 200) according to any one of claims 1 to 11, the rechargeable battery (400, 500, 600) pack further comprising a bus bar (41) connecting a pair of first and second tabs to each other through the connections holes respectively formed in a center of the first tab of a first battery assembly and a center of the second tab of a second battery assembly, the first and the second battery assemblies being adjacent battery assemblies forming a pair to one side of which the bus bar is, and, at the opposite side of the bus bar (41), first and second draw out lines (61,62) respectively connected to connection holes formed in a center of the first tab of the second battery assembly and in a center of the second tab of the first battery assembly.

13. A rechargeable battery pack as claimed in claim 12, wherein the rechargeable battery assemblies are connected in series and/or in parallel.

## Patentansprüche

1. Wiederaufladbare Batterieanordnung (100, 200, 300), die mehrere Zellen (10) umfasst, wobei jede Zelle (10) einen ersten Elektrodenanschluss (11) und einen zweiten Elektrodenanschluss (12) aufweist, wobei die Batterieanordnung (100, 200, 300) eine erste Kontaktplatte (31, 331), die die ersten Elektrodenanschlüsse (11) einer ersten Gruppe der Zellen (10) elektrisch verbindet, und eine zweite Kontaktplatte (32), die die zweiten Elektrodenanschlüsse (12) der ersten Gruppe der Zellen (10) elektrisch verbindet, umfasst
wobei die wiederaufladbare Batterieanordnung (100, 200, 300) **dadurch gekennzeichnet ist, dass** die Abstände (L1) von jeweiligen Mittelpunkten (C11) der ersten Elektrodenanschlüsse (11) zu einem Anschlussloch (311), das ein mechanisches und elektrisches Anschlussende der ersten Kontaktplatte (31, 331) definiert und in einem Mittelpunkt (C1) der ersten Kontaktplatte (31, 331) ausgebildet ist, so eingestellt sind, dass sie miteinander übereinstimmen.

2. Wiederaufladbare Batterieanordnung nach Anspruch 1, wobei die Abstände (L2) von jeweiligen Mittelpunkten (C21) der zweiten Elektrodenanschlüsse (12) zu einem Anschlussloch (321), das ein gegenüberliegendes mechanisches und elektrisches Anschlussende der zweiten Kontaktplatte (32) definiert und in einem Mittelpunkt (C2) der zweiten Kontaktplatte (32) ausgebildet ist, so eingestellt sind, dass sie miteinander übereinstimmen.

3. Wiederaufladbare Batterieanordnung (100) nach einem der Ansprüche 1 und 2, wobei die erste Gruppe von Zellen (10) aus vier Zellen (10) besteht.

4. Wiederaufladbare Batterieanordnung (100) nach einem der Ansprüche 1 bis 3, wobei die Anordnung (100) ein Packgehäuse (21, 22) umfasst, das einen ersten hohlen Halter (21) und einen zweiten hohlen Halter (22) umfasst, die als eine Struktur zum Aufnehmen der Zellen (10) aufgebaut sind, wobei der erste Halter (21) und der zweite Halter (22) so ausgelegt sind, dass sie miteinander zusammenwirken (212, 222), während die Zellen (10) in ihnen untergebracht sind.

5. Wiederaufladbare Batterieanordnung (100) nach Anspruch 4, wobei der erste und zweite Halter (21, 22) jeweils mit einem Verbindungsschlitz (212) und einem Verbindungsvorsprung (222) versehen sind, die in der Lage sind, miteinander zusammenzuwirken.

6. Wiederaufladbare Batterieanordnung (100) nach einem der Ansprüche 4 und 5, wobei der erste Halter (21) Aufnahmeabschnitte (211) umfasst und der zweite Halter (22) entsprechende Aufnahmeabschnitte (221) umfasst, wobei jeder der entsprechenden Aufnahmeabschnitte (211, 221) des ersten und zweiten Halters (21, 22) eine Zelle (10) aufnimmt.

7. Wiederaufladbare Batterieanordnung (100) nach Anspruch 6, wobei jeder Aufnahmeabschnitt (211) des ersten Halters (21) einen ersten Begrenzer (215) umfasst und jeder entsprechende Aufnahmeabschnitt (221) des zweiten Halters (22) einen zweiten Begrenzer (225) umfasst, um jede der Zellen (10) dazwischen zu halten.

8. Wiederaufladbare Batterieanordnung (100) nach einem der Ansprüche 4 bis 7, wobei der erste Halter (21) eine erste Einsatzmutter (213) umfasst, die dem ersten Anschlussloch (311) zugewandt ist, und der zweite Halter (22) eine zweite Einsatzmutter (223) umfasst, die dem zweiten Anschlussloch (321) zugewandt ist, und wobei eine erste Befestigungsschraube (53) und eine zweite Befestigungsschraube (54) durch das erste Anschlussloch (311) hindurch in die erste Einsatzmutter (213) beziehungsweise durch das zweite Anschlussloch (321) hindurch in die zweite Einsatzmutter (223) in Eingriff stehen.

9. Wiederaufladbare Batterieanordnung (100) nach Anspruch 8, wobei die erste Befestigungsschraube (53) und die zweite Befestigungsschraube (54) jeweils eine erste Anschlussklemme einer ersten Entnahmeleitung (51) und eine zweite Anschlussklemme einer zweiten Entnahmeleitung (52) fixieren.

10. Wiederaufladbare Batterieanordnung (100) nach einem der Ansprüche 1 bis 9, wobei die erste Kontaktplatte (31) einen ersten Abschnitt und einen zweiten Abschnitt umfasst, die jeweils einen Mittelpunkt aufweisen, wobei der erste Abschnitt so ausgelegt ist, dass er eine erste Gruppe von Zellen elektrisch verbindet, und der zweite Abschnitt so ausgelegt ist, dass er eine zweite Gruppe von Zellen elektrisch verbindet,
wobei die zweite Kontaktplatte (32) einen ersten Abschnitt und einen zweiten Abschnitt umfasst, die jeweils einen Mittelpunkt aufweisen, wobei der erste Abschnitt so ausgelegt ist, dass er die erste Gruppe von Zellen elektrisch verbindet, und der zweite Abschnitt so ausgelegt ist, dass er die zweite Gruppe von Zellen elektrisch verbindet,
wobei die Abstände von jeweiligen Mittelpunkten der ersten Elektrodenanschlüsse der ersten Gruppe von Zellen zu einem Anschlussloch, das ein Anschlussende des ersten Abschnitts der ersten Kontaktplatte definiert und im Mittelpunkt des ersten Abschnitts der ersten Kontaktplatte ausgebildet ist, so eingestellt sind, dass sie miteinander übereinstimmen,
wobei die Abstände von jeweiligen Mittelpunkten der zweiten Elektrodenanschlüsse der ersten Gruppe von Zellen zu einem Anschlussloch, das ein gegenüberliegendes Anschlussende des ersten Abschnitts der zweiten Kontaktplatte definiert und im Mittelpunkt des ersten Abschnitts der zweiten Kontaktplatte ausgebildet ist, so eingestellt sind, dass sie miteinander übereinstimmen,
wobei die Abstände von jeweiligen Mittelpunkten der ersten Elektrodenanschlüsse der zweiten Gruppe von Zellen zu einem Anschlussloch, das ein Anschlussende des zweiten Abschnitts der ersten Kontaktplatte definiert und in einem Mittelpunkt des zweiten Abschnitts der ersten Kontaktplatte ausgebildet ist, so eingestellt sind, dass sie miteinander übereinstimmen, und
wobei die Abstände von jeweiligen Mittelpunkten der zweiten Elektrodenanschlüsse der zweiten Gruppe von Zellen zu einem Anschlussloch, das ein zweites gegenüberliegendes Anschlussende des zweiten Abschnitts der zweiten Kontaktplatte definiert und in einem Mittelpunkt des zweiten Abschnitts der zweiten Kontaktplatte ausgebildet ist, so eingestellt sind, dass sie miteinander übereinstimmen.

11. Wiederaufladbare Batterieanordnung (200) nach Anspruch 10, wobei zwischen dem ersten Abschnitt und dem zweiten Abschnitt der ersten Kontaktplatte ein Erfassungsloch zum Anschließen eines Erfassungsanschlusses vorgesehen ist und/oder zwischen dem ersten Abschnitt und dem zweiten Abschnitt der zweiten Kontaktplatte ein Erfassungsloch zum Anschließen eines Erfassungsanschlusses vorgesehen ist.

12. Wiederaufladbarer Batteriepack (400, 500, 600), der mehrere wiederaufladbare Batterieanordnungen (100, 200) nach einem der Ansprüche 1 bis 11 umfasst, wobei der wiederaufladbare Batteriepack (400, 500, 600) ferner eine Stromschiene (41) umfasst, die ein Paar einer ersten und zweiten Kontaktplatte durch die Anschlusslöcher hindurch, die in einem Mittelpunkt der ersten Kontaktplatte einer ersten Batterieanordnung beziehungsweise einem Mittelpunkt der zweiten Kontaktplatte einer zweiten Batterieanordnung ausgebildet sind, miteinander verbindet, wobei die erste und die zweite Batterieanordnung benachbarte Batterieanordnungen sind, die ein Paar bilden, mit dessen einer Seite die Stromschiene und, auf der gegenüberliegenden Seite der Stromschiene (41), eine erste und zweite Entnahmeleitung (61, 62) jeweils mit Anschlusslöchern verbunden ist beziehungsweise sind, die in einem Mittelpunkt der ersten Kontaktplatte der zweiten Batterieanordnung und in einem Mittelpunkt der zweiten Kontaktplatte der ersten Batterieanordnung ausgebildet sind.

13. Wiederaufladbarer Batteriepack nach Anspruch 12, wobei die wiederaufladbaren Batterieanordnungen in Reihe und/oder parallel geschaltet sind.

## Revendications

1. Assemblage de batteries rechargeables (100, 200, 300), comprenant une pluralité de cellules (10), chaque cellule (10) comprenant une première borne d'électrode (11) et une seconde borne d'électrode (12), l'assemblage de batteries (100, 200, 300) comprenant une première languette (31, 331) raccordant électriquement les premières bornes d'électrode (11) d'un premier ensemble de cellules (10), et une seconde languette (32) raccordant électriquement les secondes bornes d'électrode (12) du premier ensemble de cellules (10),
l'assemblage de batteries rechargeables (100, 200, 300) étant **caractérisé en ce que** les distances (L1) des centres (C11) respectifs desdites premières bornes d'électrode (11) à un trou de raccordement (311) définissant une extrémité de raccordement mécanique et électrique de la première languette (31, 331) et formé dans un centre (C1) de la première languette (31, 331), sont déterminées pour être équivalentes les unes aux autres.

2. Assemblage de batteries rechargeables selon la revendication 1, dans lequel les distances (L2) des centres (C21) respectifs desdites secondes bornes d'électrode (12) à un trou de raccordement (321) définissant une extrémité de raccordement mécanique et électrique opposée de la seconde languette (32) et formé dans un centre (C2) de la seconde languette (32), sont déterminées pour être équivalentes les unes aux autres.

3. Assemblage de batteries rechargeables (100) selon l'une quelconque des revendications 1 et 2, dans lequel le premier ensemble de cellules (10) se compose de quatre cellules (10).

4. Assemblage de batteries rechargeables (100) selon l'une quelconque des revendications 1 à 3, l'assemblage (100) comprenant un boîtier de bloc (21, 22) comprenant un premier support creux (21) et un second support creux (22) construits dans une structure pour loger les cellules (10), dans lequel le premier support (21) et le second support (22) sont adaptés pour coopérer (212, 222) entre eux alors que les cellules (10) sont montées à l'intérieur de ces derniers.

5. Assemblage de batteries rechargeables (100) selon la revendication 4, dans lequel les premier et second supports (21, 22) sont respectivement prévus avec une rainure de couplage (212) et une saillie de couplage (222) qui peuvent coopérer entre elles.

6. Assemblage de batteries rechargeables (100) selon l'une quelconque des revendications 4 et 5, dans lequel le premier support (21) comprend des parties de réception (211), et le second support (22) comprend des parties de réception (221) correspondantes, chacune des parties de réception (211, 221) correspondantes des premier et second supports (21, 22) recevant une cellule (10).

7. Assemblage de batteries rechargeables (100) selon la revendication 6, dans lequel chaque partie de réception (211) du premier support (21) comprend une première butée (215) et chaque partie de réception (221) correspondante du second support (22) comprend une seconde butée (225), afin de maintenir entre elles chacune des cellules (10).

8. Assemblage de batteries rechargeables (100) selon l'une quelconque des revendications 4 à 7, dans lequel le premier support (21) comprend un premier écrou d'insertion (213) faisant face au premier trou de raccordement (311), et le second support (22) comprend un second écrou d'insertion (223) faisant face au second trou de raccordement (321), et dans lequel une première vis de pression (53) et une seconde vis de pression (54) sont respectivement engagées dans le premier écrou d'insertion (213) à travers le premier trou de raccordement (311), et dans le second écrou d'insertion (223) à travers le second trou de raccordement (321).

9. Assemblage de batteries rechargeables (100) selon la revendication 8, dans lequel la première vis de pression (53) et la seconde vis de pression (54) fixent respectivement une première borne d'une première ligne de soutirage (51) et une seconde borne d'une seconde ligne de soutirage (52).

10. Assemblage de batteries rechargeables (100) selon l'une quelconque des revendications 1 à 9, dans lequel la première languette (31) comprend une première partie et une seconde partie ayant chacune un centre, la première partie étant adaptée pour raccorder électriquement un premier ensemble de cellules et la seconde partie étant adaptée pour raccorder électriquement un second ensemble de cellules,
dans lequel la seconde languette (32) comprend une première partie et une seconde partie ayant chacune un centre, la première partie étant adaptée pour raccorder électriquement le premier ensemble de cellules et la seconde partie étant adaptée pour raccorder électriquement le second ensemble de cellules,
dans lequel les distances des centres respectifs des premières bornes d'électrode du premier ensemble de cellules à un trou de raccordement définissant une extrémité de raccordement de la première partie de la première languette et formé dans le centre de la première partie de la première languette, sont déterminées pour être équivalentes les unes aux autres,
dans lequel les distances des centres respectifs des secondes bornes d'électrode du premier ensemble de cellules à un trou de raccordement définissant une extrémité de raccordement opposée de la première partie de la seconde languette et formé dans le centre de la première partie de la seconde languette, sont déterminées pour être équivalentes les unes aux autres,
dans lequel les distances des centres respectifs des premières bornes d'électrode du second ensemble de cellules à un trou de raccordement définissant une extrémité de raccordement de la seconde partie de la première languette et formé dans un centre de la seconde partie de la première languette, sont déterminées pour être équivalentes les unes aux autres, et
dans lequel les distances des centres respectifs des secondes bornes d'électrode du second ensemble de cellules à un trou de raccordement définissant une seconde extrémité de raccordement opposée de la seconde partie de la seconde languette et formé dans un centre de la seconde partie de la seconde languette, sont déterminées pour être équivalentes les unes aux autres.

11. Assemblage de batteries rechargeables (200) selon la revendication 10, dans lequel un trou de détection est prévu entre la première partie et la seconde partie de la première languette pour le raccordement d'une borne de détection et/ou un trou de détection est prévu entre la première partie et la seconde partie de la seconde languette pour le raccordement d'une borne de détection.

12. Bloc-batterie rechargeable (400, 500, 600) comprenant une pluralité d'assemblages de batteries rechargeables (100, 200) selon l'une quelconque des revendications 1 à 11, le bloc-batterie rechargeable (400, 500, 600) comprenant en outre une barre omnibus (41) raccordant une paire de première et seconde languettes entre elles par le biais des trous de raccordement respectivement formés dans un centre de la première languette d'un premier assemblage de batteries et un centre de la seconde languette d'un second assemblage de batteries, les premier et second assemblages de batteries étant des assemblages de batteries adjacents formant une paire, d'un côté de laquelle se trouve la barre omnibus, et du côté opposé de la barre omnibus (41), des première et seconde lignes de soutirage (61, 62) respectivement raccordées aux trous de raccordement formés dans un centre de la première languette du second assemblage de batteries et dans un centre de la seconde languette du premier assemblage de batteries.

13. Bloc-batterie rechargeable selon la revendication 12, dans lequel les assemblages de batteries rechargeables sont raccordés en série et/ou en parallèle.
